# EUROPEAN PATENT APPLICATION

(11) **EP 4 312 363 A1**
(43) Date of publication of application: **31.01.2024**
(21) Application number: 22472004.5
(22) Date of filing: 29.07.2022
(51) Int. Cl.: H02S 20/26

(54) **SYSTEM AND METHOD FOR MOUNTING PHOTOVOLTAIC PANELS TO A BUILDING**

(71) Applicant: Stoa Ood, 1505 Sofia (BG)
(72) Inventor: Stoyanov, Damian Vassilev, 1000 Sofia (BG)
(74) Representative: Benatov, Samuil Gabriel

(57) **Abstract**

The system for mounting of photovoltaic panels to a building and the method for fixing of photovoltaic panels, in accordance with the invention, are applicable in the field of renewable energy sources and construction, specifically during the construction of façades with photovoltaic panels. The system includes a bearing surface (1) for fixing of photovoltaic panels (2), photovoltaic panels (2) and fasteners for fixing of the aforementioned photovoltaic panels (2) to the bearing surface (1). On at least one side of a photovoltaic panel (2) there is at least one hinged fastener (6), which includes a hingedly connected bearing element (3) and a hinged fastening element (4). The bearing element (3) has means for fixing to the bearing surface (1), while the fastening element (4) has means for fixing to a photovoltaic panel (2). The hinged connection between the bearing element (3) and the fastening element (4) secures rotation of the fastened photovoltaic panel (2) around the axis of the hinged connection. On the side of the photovoltaic panel (2), opposite to the one with at least one hinged fastener (6), there is a fixing element (5), configured for a detachable connection with a hinged fastener (6) of an adjacent photovoltaic panel (2).

## Description

### TECHNICAL FIELD

The system for mounting of photovoltaic panels to a building and the method for mounting of photovoltaic panels to a building, in accordance with the invention, are applicable in the field of renewable energy sources and construction, specifically during the construction of façades with photovoltaic panels.

### STATE OF THE ART

In the state of the art, different systems and methods for mechanical fixing of photovoltaic panels to building façades are known. The most widespread type is fixing of photovoltaic panels to a façade subconstruction, using manufacturer-made holes in the panel frame, into which brackets are inserted that are fixed with bolted joints to the building.

Another photovoltaic panel installation method involves using the building subconstruction for a rainscreen or glass façade and their elements for fixing. The panels are placed between the load-bearing profiles of the subconstruction and are fixed by the use of additional pressing profiles, located on the edges of the panels and the load-bearing profiles.

Frameless photovoltaic panels can also be used for construction of a photovoltaic building façade. Usually they are fixed with brackets, specifically designed for glass support. The panels are placed in opposite grooves of the brackets, while the brackets are attached by the use of fasteners to the building. The frameless panels can also be integrated into the load-bearing construction of a glass façade.

These fastening methods complicate the installation, as before the panel is fixed to the load-bearing subconstruction, it is necessary to connect cables and control elements of the panel into a circuit, located behind the panels.

Also, when maintenance is required in the event of damages, the panel has to be dismounted from the façade in order to secure access to the cables and the electrical components. All of this significantly increases the installation and maintenance time.

### TECHNICAL SUMMARY OF THE INVENTION

The task of the invention is to create a system for mounting of photovoltaic panels to a building with eased installation and a chance for quick and easy maintenance.

This task is completed through the creation of a system for mounting of photovoltaic panels to a building, in accordance with the invention.

The system includes a bearing surface for fastening of photovoltaic panels, photovoltaic panels and fasteners for fixing the aforementioned photovoltaic panels to the bearing surface. There is at least one hinged fastener on at least one side of a photovoltaic panel, which includes a bearing element and a supporting element, connected through a hinge. The bearing element has means for fixing to the bearing surface, while the fastening element has means for fixing to a photovoltaic panel. The hinged connection between the bearing element and the fastening element ensures a rotation of the fastened photovoltaic panel around the axis of the hinged connection. There is a fixing element on the side opposite to the one with at least a single hinged fastener, which is configured for a detachable connection with a hinged fastener of an adjacent photovoltaic panel.

In a preferred embodiment of the invention, the fixing element of a photovoltaic panel is detachably connected to the hinged connection of the hinged fastener of an adjacent photovoltaic panel.

It is preferable for the hinged fastener of a photovoltaic panel and the fixing element of an adjacent photovoltaic panel to be a set, which includes a three-knuckle hinge, where the bearing element is a middle unit of the three-knuckle hinge, while the supporting and fixing elements are end units of the three-knuckle hinge.

It is preferable for the bearing element, the fastening element and the fixing element to be made from aluminum, while the connecting pivot axis is made from steel.

It is preferable for the fixing element to also be a supporting element.

It is preferable for at least one of the photovoltaic panels to be openable bilaterally and having fixing elements on both sides for a detachable connection with hinged fasteners of adjacent photovoltaic panels.

In an embodiment of the invention, the bearing surface is a profile of a building subconstruction.

According to the invention, a method for fixing of photovoltaic panels to a building is also created, where the photovoltaic panels are fastened to a building by hinged fasteners and to each other by the use of fixing elements. The hinged fasteners of the photovoltaic panels include hingedly connected bearing and fastened elements, wherein the bearing element is connected to a bearing building surface by the use of supporting means, while the fastening element is connected to a photovoltaic panel by the use of supporting means. The hinged connection between the bearing element and the fastening element ensures rotation of the fastened photovoltaic panel around the axis of the hinged connection. On the side of the photovoltaic panel, which is opposite to the side with the hinged fastener, there is a fixing element, which is detachably connected to a hinged fastener of an adjacent photovoltaic panel, which locks the photovoltaic panels to each other and are held in a closed position.

It is preferable for the hinged fasteners of adjacent photovoltaic panels to be mounted in such a way that their pivot axes are parallel to each other.

The advantage of the invention is that it ensures a possibility for quick and easy installation of the photovoltaic panels to a building, easy subsequent maintenance of their electrical part, because the panels can be opened wide, for example at an angle of 60° relative to the wall, onto which they are installed, and quick replacement of a damaged panel because of the hinged fasteners and the fixing elements, which allow rotation and fixing at the same time, relative to the building in the fixing spots. After the end of the panel lifecycle, which is usually around 25-30 years, the same can be replaced without mandatory dismounting of a large number of elements.

### BRIEF DESCRIPTION OF THE FIGURES

Further into the description, the system and the method for mounting of photovoltaic panels to a building, objects of the invention, are clarified by the use of embodiments, specified as examples, non-limiting to the scope of the invention, with reference to the applied figures, where:
Figure 1 is a frontal view of photovoltaic panels, fixed to vertical bearing profiles of a building in a system, where the panels open horizontally.
Figure 2 is a frontal view of photovoltaic panels, fixed to horizontal bearing profiles of a building in a system, in accordance with another embodiment of the invention, where the panels open vertically.
Figure 3 is a partial view of a system for fixing of photovoltaic panels to a building, in accordance with an embodiment of the invention, where a panel is fixed with a three-knuckle hinge and is opened vertically.
Figure 4 is a partial view of a system for fixing of photovoltaic panels to a building, in accordance with another embodiment of the invention, where the panels are frameless, are fixed with a three-knuckle hinge and open vertically.
Figure 5 is a partial view of a system for fixing of photovoltaic panels to a building, in accordance with another embodiment of the invention, where a panel is fixed with a three-knuckle hinge to a horizontal bearing profile and is opened horizontally.
Figure 6 is a partial view of a system for fixing of photovoltaic panels to a building, in accordance with another embodiment of the invention, where a frameless panel is fixed by the use of a hinged fastener to a horizontal profile and is opened vertically.
Figure 7 is a partial view of a system for fixing of photovoltaic panels to a building, in accordance with another embodiment of the invention, where the panels are fastened with a three-knuckle hinged fastener and open horizontally.

### EXEMPLARY EMBODIMENT OF THE INVENTION

In the current description, the terms "horizontal" and "vertical" refer to the position of the photovoltaic panels relative to the terrain and their usual application. The terms "open" and "closed" position of the panels refer to their usual application, when they are fixed to a building, respectively a closed position means a position of the photovoltaic panel in its usual mode of operation, when it is fixed to a building, while an open position is a position of the panel that allows access to the electrical installation behind it after it is mounted to the building. The terms "from above", "from below", "sidelong", "front", "rear", "left hand side" and "right hand side" refer to the position of the photovoltaic panels relative to the terrain and the building façade, in a mounted panel state during their usual mode of operation.

The system for mounting of photovoltaic panels to a building, in accordance with a preferred embodiment of the invention, includes a bearing surface 1, photovoltaic panels 2 and fasteners for fixing the aforementioned photovoltaic panels 2 to the bearing surface 1. The system can include two or more photovoltaic panels 2, placed in a different manner relative to each other, for example in long or short columns and/or long or short rows, made of one or more panels 2.

The bearing surface 1 can be a building subconstruction profile, the building façade itself, a roof or another suitable surface of the building.

From one or more sides of each photovoltaic panel 2 there are hinged fasteners 6, which secure fixing of the photovoltaic panels 2 to a building and optionally to an adjacent panel 2.

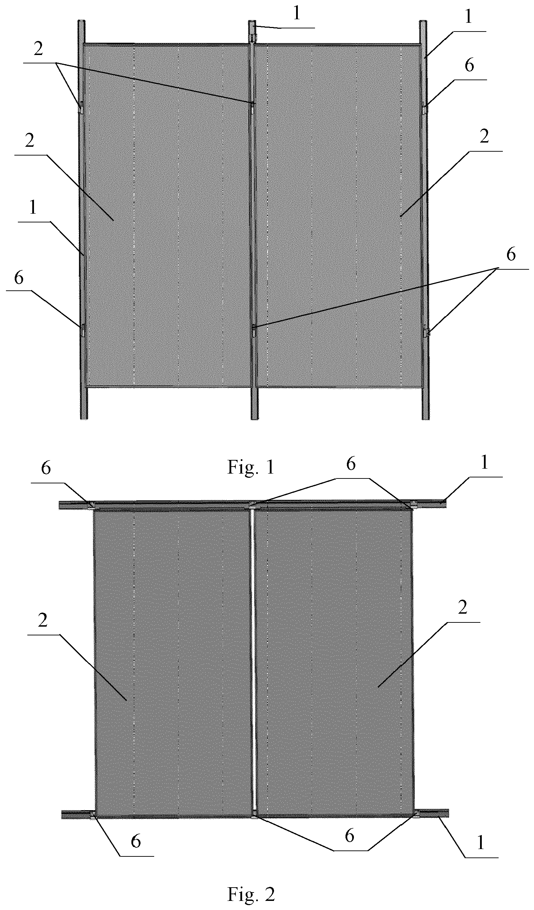

The hinged fasteners 6 can be installed one per photovoltaic panel 2 or more than one, for instance two, three, four or more and they can be placed on the same side of the respective photovoltaic panel 2 or on two opposite sides of the panel 2 as shown in figures 1 and 2.

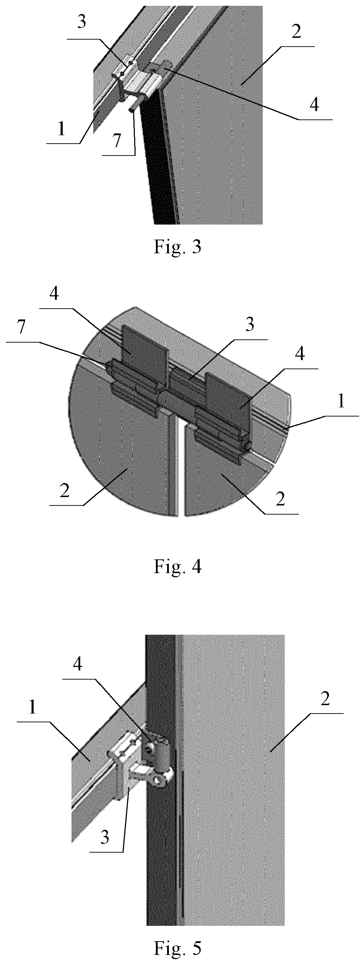

The hinged fasteners 6 include at least hingedly connected bearing element 3 and fastening element 4 as shown in figures 3, 4, 5, 6 and 7.

The bearing element 3 of the hinged fastener 6 has means for fixing to the bearing surface 1 which, for example, can be a plate with a C-shaped profile as shown in figures 3, 4, 5 and 6, which encompasses a bearing profile or a straight I-shaped plate that is glued to the bearing surface 1; those plates are additionally fixed with fasteners like screws, for example. In another embodiment of the invention, the means for fixing of the bearing element 3 can be an elongated detail to be fixed into a hole, a chamfer or a groove of the bearing surface 1 in a manner known from the state of the art, for example it can be fixed by being inserted into a hole in the bearing surface 1 for example by the use of self-drilling screws, going through holes of the means or by placing fixing dowels/bolts, which pass through holes in the bearing surface 1 and the supporting means or by the use of bayonet locking of the supporting means in the hole of the bearing surface 1 or by the use of the forming of a hook-shaped end of the supporting means, which is to be fixed into the hole of the bearing surface 1 or by the use of another method known from the state of the art.

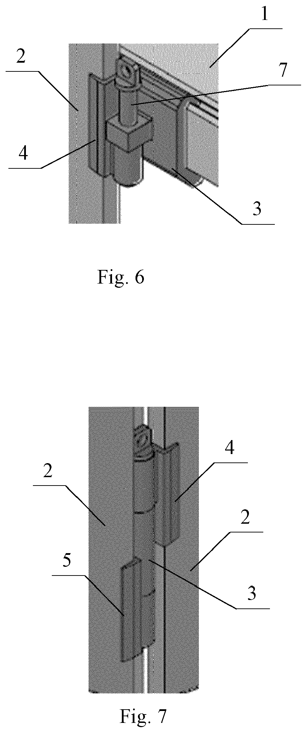

The fastening element 4 of the hinged fastener 6 has supporting means to be fixed to a photovoltaic panel 2, which can be, for example, a clamping plate, a profile or another suitable detail. For example, it is possible for the supporting means of the fastening element 4 to a photovoltaic panel to be mounted to a photovoltaic panel 2 frame by the use of self-drilling screws, screwed from the rear side and sidelong to the panel 2 frame. For fixing of the fastening element 4 to frameless photovoltaic panels, brackets or plates are used, as shown in figures 4 and 6, which are glued to the panel 2. The plates can have a U-shaped profile and envelop the panel, while it is possible for the plate that is glued to the rear part of the panel that faces the building to be longer in order to secure a larger glued surface.

The hinged connection between the bearing 3 and the fastening element 4 can be made by connecting two coaxial through holes; for example, a hollow cylinder of the bearing element and a through ring of the supporting element, into which a pivot axis 7 is inserted.

In case the hinged connection of a panel 2 does not connect with an adjacent panel 2 and instead only with a bearing surface 1 of a building, as shown in figures 5 and 6, then the hole of the bearing element 3 cannot be a through hole.

The pivot axis 7 can be of different types - with or without a thread, like for example a dowel, a bolt, a screw, a bracket or another suitable detail.

The pivot axis 7 can be fixed to the bearing 3 and the fastening element 4 by the use of different methods, depending on the type of axis being used. For a bolt, for example, the most suitable method is the use of a nut. The dowel can be fixed by the use of pins, protruding sidelong from it or by the use of a support head. The bracket can be fixed by the use of its own geometry. The screw can be fixed by the use of a snap ring. Other fixing methods are also possible for the described types of axes as well as other suitable types of axes. It is possible for the pivot axis to be a dowel, immovably connected to one of the elements, for example by the use of welding or cast-in with it as a single element. For example, in figure 3, the pivotal axis is a horizontal dowel 7 is in the hinged fastener, fixed to the bearing element 3 and protruding from both sides, while during panel installation the pivotal unit of the fastening element 4 is freely threaded onto the dowel 7.

It is possible to place additional plates for further strengthening of the hinged connection, covering at least part of the hinged fastener 6. For example, it is possible to use a U-shaped plate that encompasses the hinged fastener 6 from above, from below and sidelong. It is possible for the aforementioned plates to have through holes for passage of the pivotal axis 7.

The pivotal axis 7 can be inserted from above downwards as well as from below upwards into the hinged fastener 6, as long as there are means for fixing and locking into it, in order to prevent it from accidentally falling out.

The hinged connection can be detachable or non-detachable.

The hinged connection between the bearing element 3 and the fastening element 4 ensures rotation of the fastened photovoltaic panel 2 around the axis of the hinged connection.

On the side of the photovoltaic panel 2, opposite to the one with a hinged fastener 6, there is at least one fixing element 5 fixed to the photovoltaic panel 2, that fixing element 5 being configured for a detachable connection with a hinged fastener 6 of an adjacent photovoltaic panel 2. Thus, the fixing element 5 of a photovoltaic panel 2 is detachably connected to the hinged connection of the hinged fastener 6 of an adjacent photovoltaic panel 2. Various connection methods are possible between the fixing element 5 and the hinged connection; for example, by the use of a magnet or inserting the pivotal axis 7 into a hole of the fixing element 5, which is coaxial to the bearing element 3 or by the use of a different suitable method.

From one of their sides, the photovoltaic panels 2 may not be connected to a fixing element 5, if these panels are endmost, as shown in figures 5 and 6, and on the respective side, an additional panel 2 is not mounted. In these cases, these photovoltaic panels 2 connect on one side by the use of a bearing element from the building and with an adjacent panel 2 from the other.

In a preferred embodiment, the hinged fasteners 6 of the photovoltaic panels 2 and the fixing elements 5 of the adjacent photovoltaic panels 2, with which a connection is established, are a set that includes a three-knuckle hinge, where the bearing element 3 is a middle unit of the three-knuckle hinge, while the fastening 4 and the fixing 5 elements are end units of the three-knuckle hinge. In the preferred embodiment, shown in figure 7, the hinged connector of the set is comprised of the units of the bearing 3, the fastening 4 (positioned from above) and the fixing 5 (positioned from below) elements, which are coaxially positioned hollow cylindrical elements, connected by the use of a vertical dowel 7 with a limiting head in the upper part. It is possible for the lower end of the dowel to have locking means, like a thread with a nut or other known means that prevent the removal of the dowel from the hinged connector. In a locked position, the dowel passes through all three units, thus holding them together. To open the left panel, in an unlocked position, the dowel is pulled out, until it completely releases the unit of the fixing element 5 of the left panel from the hinged connection, so that the left panel can be opened from the left. If the dowel is completely removed, then the fastening element 4 of the right panel, which also serves as a fixing element, can be opened from the left, if the right side of the right panel has another fastening 4 or fastening and fixing element that holds the panel in an unlocked position and ensures its rotation. In this case, both adjacent panels 2 can be opened at the same time in opposite directions.

In another embodiment of the invention, shown in figure 4, the hinged fasteners 6 of the photovoltaic panels 2 and the fixing elements 5 of the adjacent photovoltaic panels 2, with which the connection is established, are a set, including a five-knuckle hinge, where the bearing element 3 is a middle unit of the five-knuckle hinge, while there are two units on both sides, two fastening 4 and two fixing 5 elements. This embodiment is suitable for fixing of four photovoltaic panels, two from above and two from below, respectively, or two from the left and two from the right, depending on whether the panels are mounted to be opened horizontally or vertically. In this case, the five-knuckle hinge is placed on the edge between the two pairs of photovoltaic panels.

The bearing element 3, the fastening element 4 and the fixing element 5 are made, for example, from aluminum, while the pivotal axis 7 connecting them is made, for example, from steel. Alternatively, it is possible for all of the elements to be made from steel or another suitable material.

The fixing elements 5 can also be used as supporting elements. That is suitable only for the cases where the photovoltaic panels 2 are mounted to a horizontal profile for the purpose of vertical opening. In these cases, the fixing elements can also bear the panel, to which they are fixed. It is also possible for the fixing elements 5 to be used as supporting elements for photovoltaic panels, which are mounted to vertical profiles for horizontal opening. In these cases, however, the fixing elements 5 have to have locking means, which prevents them from falling down and which locking means can be released when needed, so that it opens a specific photovoltaic panel 2 with a fixing element 5 or an adjacent panel 2. A non-limiting list of examples for such stopping means are, for example, snap rings, dowels, caps, hooks, screws or other means.

For easier field application of the photovoltaic panels 2, they can be made to open bilaterally. For that purpose, fixing elements 5 are mounted on two of the opposite sides of each panel 2, where the aforementioned fixing elements 5 have to also be usable as supporting elements. Thus, when opening the panel 2, one of the fixing elements 5 will be used as a fixing element, while the fixing element 5 on the opposite side of the panel 2 will be used as a supporting element. Thus, the panels 2 can be opened from below upwards or from above downwards when mounting the panels to horizontal bearing profiles or from the left or right when mounting the panels to vertical bearing profiles. Thus, fixed photovoltaic panels 2 can be unlocked on one side and opened (rotated outwards) by the use of the hinged fasteners 6 on the other side.

### Exemplary mounting method for photovoltaic panels to a building:

- the bearing element 3 of the hinged fasteners 6 is connected to a bearing surface 1 of a building by supporting means;
- the fastening element 4 of the hinged fasteners 6 is connected to one side of a photovoltaic panel 2 by the use of supporting means;
- on the side of the photovoltaic panel 2, opposite to the side with the hinged fastener 6 is where a fixing element 5 is fixed, which is connected by the use of a detachable connection to a hinged fastener 6 of an adjacent photovoltaic panel 2, thus the photovoltaic panels interlock and stay in a closed position.

Different photovoltaic panel 2 fixing methods are possible; horizontal and vertical, for example, or at an angle relative to the terrain.

The photovoltaic panels 2 can be opened horizontally as well as vertically, while some of the panels 2 can be constructed only for horizontal or vertical opening and some are for both vertical and horizontal opening. This is achieved through the different fixing methods of the hinged fasteners 6. For example, the hinged fasteners 6 of adjacent photovoltaic panels 2 are fastened so that their pivot axes 7 are parallel to each other, which means that both adjacent panels 2 are opened horizontally, as shown in figure 1, or both panels 2 are opened vertically, as shown in figure 2. Alternatively, it is possible for the pivot axes 7 to be perpendicular to each other, which means that one of the respective adjacent panels 2 will be opened horizontally, while the other - vertically.

In order to open a panel horizontally, as well as vertically, it has to have at least on two of its sides, adjacent to each other, hinged fasteners 6, while the other two sides have fixing elements 5. In this case, the hinged fasteners 6 on one of its sides have to remain locked, while the other hinged fasteners 6 and fixing elements 5 have to be disconnected, so that the panel can be opened.

Also, the hinged fasteners 6 can be fixed from above, from below or sidelong on the panel 2, depending on the necessary direction of opening. Hinged fasteners 6, mounted from above to the panel 2 allow the panel 2 to be opened upwards. Hinged fasteners 6, mounted sidelong to the panel, 2 allow sideways opening of the panel 2, left and/or right, respectively. Hinged fasteners 6, mounted from below to the panel 2, allow downwards opening of the panel, while this embodiment is suitable for use in systems, where the panels 2 are mounted at an angle.

The reference numbers of the technical features are included in the claims with the only aim to increase the intelligibility of the claims and, therefore, these reference numbers have no limiting effect on the interpretation of the elements, marked with these reference numbers.

## Claims

1. System for mounting of photovoltaic panels to a building, the system includes a bearing surface for fastening of photovoltaic panels, photovoltaic panels and fasteners for fixing of the aforementioned photovoltaic panels to the bearing surface, **characterized in that** on at least one side of a photovoltaic panel (2) there is at least one hinged fastener (6), which includes a hingedly connected bearing element (3) and a fastening element (4), wherein the bearing element (3) has means for fastening to the bearing surface (1), and the fastening element (4) has means for fixing to a photovoltaic panel (2), wherein the hinged connection between the bearing element (3) and the fastening element (4) ensures rotation of the fastened photovoltaic panel (2) around the axis of the hinge, wherein on the side, opposite to the one with at least one hinged fastener (6) of the photovoltaic panel (2) there is a fixing element (5), configured for a detachable connection with a hinged fastener (6) of an adjacent photovoltaic panel (2).

2. System for mounting of photovoltaic panels to a building according to claim 1, **characterized in that** the fixing element (5) of a photovoltaic panel (2) is detachably connected to the hinged connection of the hinged fastener (6) of an adjacent photovoltaic panel (2).

3. System for mounting of photovoltaic panels to a building according to claim 2, **characterized in that** the hinged fastener (6) of a photovoltaic panel (2) and the fixing element (5) of an adjacent photovoltaic panel (2) are a set, including a three-knuckle hinge, wherein the bearing element (3) is a middle unit of the three-knuckle hinge, and the fastening (4) and the fixing (5) elements are end units of the three-knuckle hinge.

4. System for mounting of photovoltaic panels to a building according to claim 3, **characterized in that** the bearing element (3), the fastening element (4) and the fixing element (5) are made of aluminum, and the pivotal axis (7) connecting them is made of steel.

5. System for mounting of photovoltaic panels to a building according to any of claim from 2 to 4, **characterized in that** the fixing element (5) is also a fastening element.

6. System for mounting of photovoltaic panels to a building according to claim 5, **characterized in that** at least one of the photovoltaic panels (2) can be opened bilaterally, wherein on two of its opposite sides the panel has fixing elements (5) for a detachable connection with hinged fasteners (6) of adjacent photovoltaic panels (2), which fixing elements (5) are also fastening elements.

7. System for mounting of photovoltaic panels to a building according to any of the previous claims, **characterized in that** the bearing surface (1) is a profile from a building subconstruction.

8. Method for mounting of photovoltaic panels to a building, wherein the photovoltaic panels (2) are fastened to a building by hinged fasteners (6), and to each other by the use of fixing elements (5), wherein the hinged fasteners (6) of the photovoltaic panels (2) include a hingedly connected bearing element (3) and a fastening element (4), wherein the bearing element (3) is connected to the bearing surface (1) of a building by means for fastening , and the fastening element (4) is connected to a photovoltaic panel (2) by means for fastening , wherein the hinged connection between the bearing element (3) and the fastening element (4) ensures rotation of the fastened photovoltaic panel (2) around the axis of the hinged connection, wherein on the side of the photovoltaic panel (2), which is opposite to the side with the hinged fastener (6), there is a fixing element (5) which is detachably connected to a hinged fastener (6) of an adjacent photovoltaic panel (2), thus the photovoltaic panels (2) are locked to each other and are held in a locked position.

9. Method for mounting of photovoltaic panels to a building according to claim 8, wherein the hinged fasteners (6) of adjacent photovoltaic panels (2) are mounted so that their pivot axes (7) are parallel to each other.
